# EUROPEAN PATENT SPECIFICATION

(11) **EP 2 973 531 B1**
(45) Date of publication and mention of the grant of the patent: **17.07.2019**
(21) Application number: 14763213.7
(22) Date of filing: 17.03.2014
(51) Int. Cl.: G02F 1/167, G09F 3/20, G09F 3/02

(54) **METHOD AND APPARATUS FOR ELECTRONICALLY DISPLAYING INFORMATION**
VERFAHREN UND VORRICHTUNG ZUR ELEKTRONISCHEN ANZEIGE VON INFORMATIONEN
PROCÉDÉ ET APPAREIL PERMETTANT D'AFFICHER ÉLECTRONIQUEMENT DES INFORMATIONS

(30) Priority: 15.03.2013 US 201361789373 P
(43) Date of publication of application: 20.01.2016
(73) Proprietor: Franwell, Inc., Lakeland, FL 33811-1144 (US)
(72) Inventor: DAGDELEN UYSAL, Dilek, Lakeland, FL 33803 (US); WELLS, Jeffrey, Lane, Lakeland, FL 33810 (US); HOLCOMB, Edward, Needham, MA 02494 (US)
(74) Representative: Müller Verweyen
(86) International application number: PCT/US2014/030715
(87) International publication number: WO 2014/145875

(56) References cited:
- WO-A1-2011/001024
- CN-A- 102 566 190
- CN-A- 102 929 065
- US-A1- 2003 071 800
- US-A1- 2003 137 477
- US-A1- 2005 134 551
- US-A1- 2008 220 685
- US-A1- 2008 224 993
- US-A1- 2012 320 001

## Description

### CROSS-REFERENCE TO RELATED APPLICATION

The present application claims the benefit of U.S. Provisional Application Serial No. 61/789,373, filed March 15, 2013, which is hereby incorporated by reference herein in its entirety, including any figures, tables, or drawings.

### BACKGROUND OF INVENTION

Electronic paper (e-paper), or electronic ink, is display technology that has gained popularity. Unlike conventional backlit flat panel displays, which emit light, e-paper displays reflect light like ordinary paper, making it more comfortable to read. The e-paper surface can also have a wider viewing angle than conventional backlit displays.

Many e-paper technologies can hold static text and images indefinitely without continued use of electricity. The frontplane of the e-paper is the material, or film, that is used to hold the electrically charged pigments and typically incorporates tiny capsules or physical particles that are moved based on the applied electrical filed. The backplane is typically made with thin film transistors (TFTs) that drive the frontplane by the electrical field created on it to attract and distract the pigments. Supporting platform technology, such as a controller, drives the backplane to supply the necessary voltage difference and current based on the image that needs to be generated.

A display with an electrophoretic frontplane forms visible images by rearranging charged pigment particles using an applied electric field. A specific example of an electrophoretic display incorporates titanium dioxide (titania) particles approximately one micrometer in diameter dispersed in a hydrocarbon oil. A dark-colored dye is also added to the oil, along with surfactants and charging agents that cause the particles to take on an electric charge. This mixture is placed between two parallel, conductive plates separated by a gap of 10 to 100 micrometers. When a voltage is applied across the two plates, the particles migrate electrophoretically to the plate bearing the opposite charge from that on the particles. When the particles are located at the front (viewing) side of the display, it appears white, because light is scattered back to the viewer by the high-index titania particles. When the particles are located at the rear side of the display, it appears dark, because the incident light is absorbed by the colored dye. If the rear electrode is divided into a number of small picture elements (pixels), then an image can be formed by applying the appropriate voltage to each region of the display to create a pattern of reflecting and absorbing regions.

These electrically charged particles suspended in a colored oil inside tiny microcapsules. Each microcapsule contains positively charged white particles and negatively charged black particles suspended in a viscous fluid. Instead of microcapsules, microcups can also be used such as SiPix e-paper films.

In the bichromal frontplanes, microscopic plastic beads having two hemispheres with different colors are encapsulated in a pocket of oil. Positively or negatively charged hemispheres rotate freely within the plastic based on the electric field is applied on the e-paper so that negatively charged hemisphere face up with the positively charged electrode, and vice versa. As e-ink does not need to be refreshed like backlit technology, the image stays in place until the next electrical charge. In this way, the display can power down to zero, using less power overall than a display that constantly needs refreshing.

E-paper displays can incorporate active matrix, segmented, and/or passive matrix technologies for their backplanes. An active matrix display typically incorporates a backplane and can have a large array of pixels that each of them is controlled by a Thin Film Transistor (TFT) array. An example of a commercial electrophoretic display is the high-resolution active matrix display used in the Amazon Kindle e-readers. The display is constructed from an electrophoretic imaging film manufactured by E Ink Corporation. Glass is a common substrate that is used to embed these thin film transistors, as glass can withstand the high temperatures needed for the display manufacturing process. The recent development of organic thin film transistor (OTFT), which utilizes lower temperatures during fabrication, allows a plastic substrate to be used for the backplane. Using a plastic substrate for the background enhances the flexibility and durability of the e-paper display, such that flexible e-paper can be manufactured using plastic substrates and plastic electronics for the display backplane.

Retailers typically place items for sale on shelves and place shelf tags on the edge of the shelves to provide potential purchasers information about the items on the shelf. Retailers have been seeking a technology for automatically changing the information displayed on the price tags placed on the edges of the shelves. Electronic Shelf Label (ESL) technology allows retailers to remotely change the prices of the items, with or without human intervention. However, implementing ESL with a label for every unique item is often impractical, due to high cost. According to the Food Marketing Institute, a typical grocery store has 38,718 different products on display at a given time, which means that thousands of ESL's per store are needed for the typical grocery to have an ESL for each item. Considering the high price of an individual ESL, ESL technology is not preferred by retailers, especially for low value items.

Accordingly, it is desirable to provide a low-cost, low power-consumption, and durable solution to allow retailers to display information on the shelf edge, and, optionally, automatically update such information.

US 2003/0137477 A1 discloses a glass substrate printed wiring board used as the printhead for electric paper. Printing electrodes are formed at the edge of the glass substrate. Signals are generated by a driver circuit and conducted by traces to the electrodes to generate an electric field to rotate the bichromal rotating elements of the electric paper to form black or white pixels.

US 2005/0134551 A1 discloses an electric display system includeing electric display material having two opposing outer surfaces, wherein at least one of the outer surfaces is at least partially covered in a plurality of spaced apart, charge-retaining islands comprised of a conductive material with areas of the insulating material interposed therebetween. A charge transfer device is arranged in operative association with the display material, having a first component made of a flexible, non-conductive material and a plurality of individually adjustable conductive elements, wherein movement of one adjustable conductive element does not result in movement of another adjustable conductive element.

US 2003/0071800 A1 discloses an electronic book, having a single screen, employs an electric field addressable, rewritable, colorant, preferably a bistable molecular colorant, for providing printed pages sequentially to a reader. The electronic book includes the rewritable screen coupled to an extraction-retraction device, an electrode array printer, a sheet position detector, and associated circuitry to download, store, sequence, and print images on the screen.

WO 2011/001024 A1 discloses a system for directing, guiding or evacuating comprising at least one display apparatus, which is fitted to operate in a first operating mode, i.e. in normal mode, as a display apparatus of an electronic price label system, and in a second operating mode, i.e. in alarm mode, to direct, guide or warn people.

### BRIEF SUMMARY

Embodiments of the subject invention relate to an apparatus for electrically displaying information. Specific embodiments pertain to displaying information on shelf edges in a retail setting. Embodiments can provide a low-cost, low-power consumption, and durable solution that allows retailers to display, and, optionally, automatically update, information on shelf edges utilizing e-paper technology and wireless communications. Specific embodiments pertain to an e-paper display without a glass backplane. Further specific embodiments pertain to a flexible e-paper display incorporating a separate driving mechanism that can drive one or multiple e-papers.

### BRIEF DESCRIPTION OF DRAWINGS

**Figure 1** shows an example of an e-paper film and the layers of the e-paper.
**Figure 2** shows the roller contact element with the e-paper while it is writing on the e-paper.
**Figure 3** shows charge retention islands described in US 6,222,513.
**Figure 4** shows an alternate charge retention islands described in US 6,222,513.
**Figure 5** shows a 48" x 1.75" e-paper display in accordance with an embodiment of the subject invention, and an enlargement of a section thereof.
**Figure 6** shows the arrangement of the shelf attachment/display holder, the e-paper display, and the driver.
**Figure 7** shows two views of an embodiment of the subject invention, showing the manner in which the driver surrounds the e-paper and the wheels attached to the driver enable it to move the e-paper from side to side and/or move along the e-paper.
**Figure 8** shows the manner in which the wiper attached to the driver can support the front panel of the driver for encapsulation.
**Figure 9** shows two embodiments of the subject invention in which the conductive element that transfers charge to the e-paper is a roller, having a cylindrical element with different conductive/non-conductive patterns.
**Figure 10** shows two embodiments of the subject invention in which the conductive element that transfers charge to the e-paper is a roller, having a conductive beads and non-conductive areas in between the conductive beads.
**Figure 11** shows the positions of two conductive plates embedded to the front plate and a power source located on a side of the display.
**Figure 12** shows the foam with a thin plastic layer on top which can support the holder and allows the driver to slide over the surface more easily.
**Figure 13** shows how, when the driver moves, the driver can push the foam back and create a cavity for easier movement.

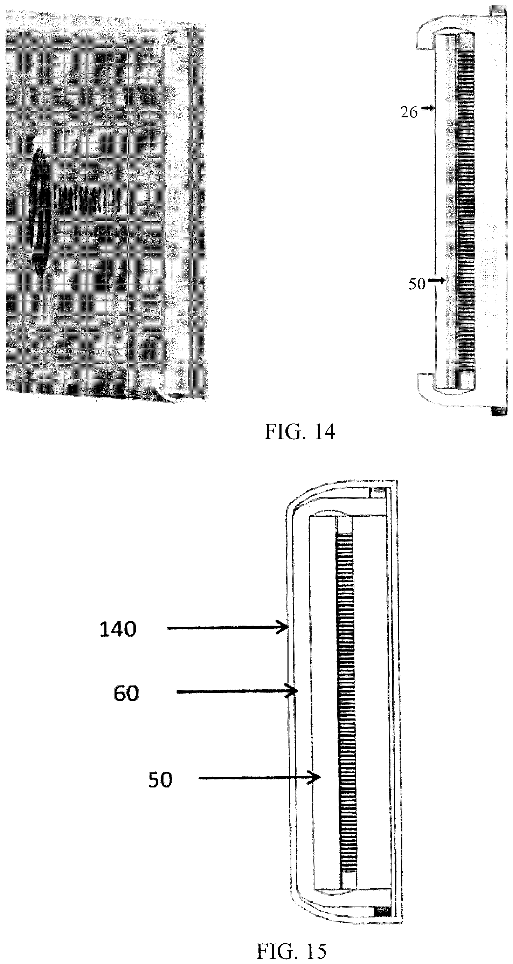

**Figure 14** shows the e-paper display having a protective barrier on top to keep the display safe from impacts and environmental damages.
**Figure 15** shows a display with an enclosure that protects the driver along with the e-paper.
**Figure 16** shows a driver connection to a PCB board and conductive portions that can be charged by a control unit (not shown).
**Figure 17** shows a different connection method of a cylindrical element with a PCB using a holder and connector.
**Figure 18** shows a planer view of row and column electrodes of an e-paper display described in US20130162511, which can be incorporated with an embodiment of the invention.
**Figure 19** shows another embodiment of a roller element.

### DETAILED DISCLOSURE

Embodiments of the subject invention relate to an apparatus for electrically displaying information. Specific embodiments pertain to displaying information on shelf edges in a retail setting. Embodiments can provide a low-cost, low-power consumption, and durable solution that allows retailers to display and automatically update information on shelf edges utilizing e-paper technology and wireless communications. Specific embodiments pertain to an e-paper display without a backplane with transistors. Further specific embodiments pertain to a flexible e-paper display incorporating a separate driving mechanism that can drive one or multiple e-papers.

Embodiments are directed to an electronic display system. Embodiments are also directed to an e-paper driver that can be used in an electronic display. Further embodiments relate to e-paper that does not utilize an active matrix backplane and is, optionally, flexible. Specific embodiments can cover an entire shelf edge with the e-paper display, which can show all the information that a traditional price tag, or shelf tag, shows for each item, and can display additional information on the space between where traditional shelf tags are positioned. As more than half of a typical shelf edge is empty or blank, embodiments can allow the shelf edge to perform as an information and marketing display, which can enhance the customers' shopping experience and generate additional revenue for the retailers.

Various embodiments of the subject e-paper display can be as wide and long as it is required for the display purpose. Specific embodiment for the shelf edge can be 4 feet long and at least one half an inch wide, whereas an embodiment of an advertising display can be 6 feet long and 3 feet wide. Further specific embodiments can be at least one foot long, at least two feet long, at least three feet long, and at least four feet long, and can be at least one half an inch wide, at least three quarters of an inch wide, and at least an inch wide. E-Paper is easy to read, can be read from almost any angle, is lightweight, durable, and available in black and white and/or color.

Various embodiments of the subject display incorporate e-paper utilizing dot matrix, segmented, and/or passive matrix technologies, such as an e-paper described in US2013/0162511. The subject displays can display a variety of information, such as the pricing of the item, various images, animations, and other information. An active matrix display incorporates a backplane and can have a large array of pixels, which can be controlled by a Thin Film Transistor (TFT) array. Glass is a common substrate that is used to embed these transistors for various reasons, such as the fact that glass can withstand high temperatures that are needed for the manufacturing process. The recent development of organic thin film transistor (OTFT), which utilizes lower temperatures, allows a plastic substrate to be used for the backplane. Using plastic brings the advantages of flexibility and durability, which are key features in e-paper technology. However, the process of combining the front plane of the e-paper with the backplane, which drives the ink to the front plane, gets complicated when a flexible material is used for the backplane. The pixels and the TFT array need to be aligned precisely at all times, but flexible material makes this alignment difficult, especially for a big display. Glass substrate provides the rigidness that makes achieving this alignment easier; however, glass substrates are expensive and fragile.

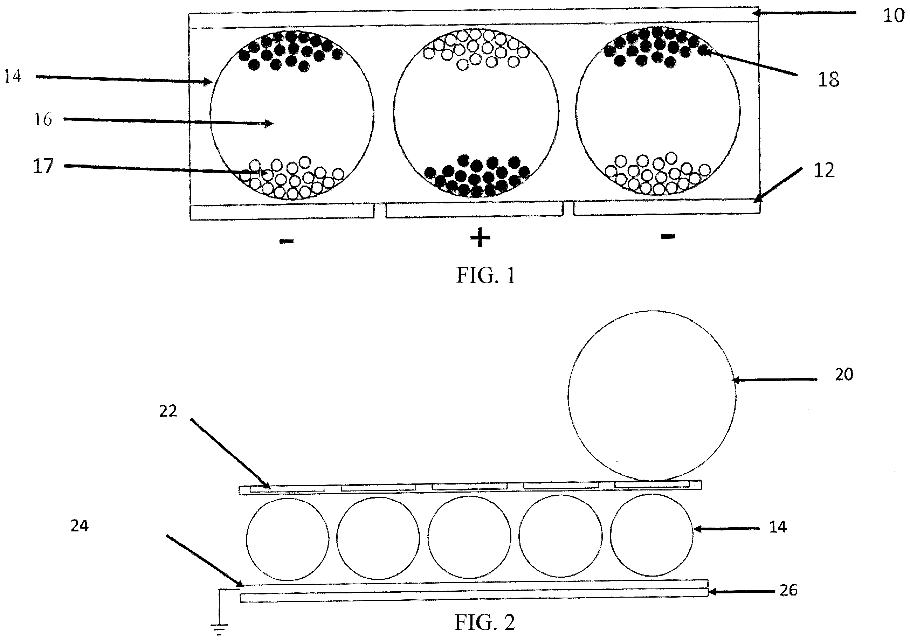

Referring to Figure 1 as an example, embodiments can have pixels that are comprised of electrically charged particles suspended in a colored oil inside tiny microcapsules **14.** Each microcapsule **14** can contain positively charged white particles **17** and negatively charged black particles **18** suspended in a viscous fluid **16.** By applying a charge to electrode regions **12** a voltage can be applied from the electrode region **12** to the electrode **10,** which is preferably transparent.

Embodiments pertain to a flexible display **50** having a conductive layer, which acts as an electrode, on a first side of the region incorporating the microcapsules, or other structure for displaying an output and a plurality of conductive regions **22** on the opposite side of the region incorporating the microcapsules, which act as electrodes. Specific embodiments do not have a backplane with any type of TFT. Figure 2 shows a schematic of an embodiment in accordance with the subject invention. The front plane is controlled by using an e-ink driver **60** that slides with respect to the display **50.** In one embodiment, the driver **60** moves along the display similar to how a print head prints ink on a paper. In another embodiment, the display **50** moves past the driver **60.** In other embodiments, some combination of movement of the driver **60** and the display **50** can allow the driver to rewrite the display **50** by sequentially rewriting subsections of the display **50.** Such display **50** and driver **60** combinations can provide a low cost solution, using a plastic substrate to also provide durability.

The e-paper driver **60** can communicate with a server or other hardware via wired and/or wireless technologies, such as RF, Zigbee, and/or Wi-Fi. The server or other hardware can provide updates with respect to the information to be displayed on the required areas of the display. A power source **100** can be positioned on the driver **60,** the driver **60** can draw power from a stationary unit on the display system, and/or power can be supplied to the driver **60** by other techniques known in the art. In an embodiment, the power source **100** can be an energy harvesting device, a replaceable battery, a rechargeable battery, or an electric outlet.

The following are specifications of a specific display device, referred to as POPedge, incorporating a driver **60** in accordance with an embodiment of the subject invention:
**1)** POPedge is an e-paper display that covers the entire shelf edge and shows information such as price, description, brand, ID number (like barcode, QR code), availability, location, freshness date, and/or on sale status with respect to the items on, under, or near the shelf, and/or other items.
**2)** POPedge uses an e-ink driver similar to a printhead to update the information on the front plane eliminating the need for a backplane
**3)** In a store, an aisle can contain multiple displays. POPedge can either be a modular unit where the display portions **50** can be combined together and one driver **60** can update the whole aisle or each unit can be used as a stand-alone display.
**4)** The driver **60** can carry the communication module and the power source **100** on the driver **60** or a station located along the edge of the display can control the driver
**5)** The communication protocol can vary depending on the retailer's infrastructure. Multiple communication technologies can also be enabled on a single POPedge device.
**6)** Different sources **100** can be utilized to power POPedge. The source(s) can be located on the driver, display, and/or shelf. Examples of power sources **100** that can be utilized include, but are not limited to,
   a) An energy harvesting unit
      i. Solar panels
      ii. RF power harvesting unit
      iii. Motion energy harvesting
   b) A replaceable and/or rechargeable battery on the display
   c) Electricity grid

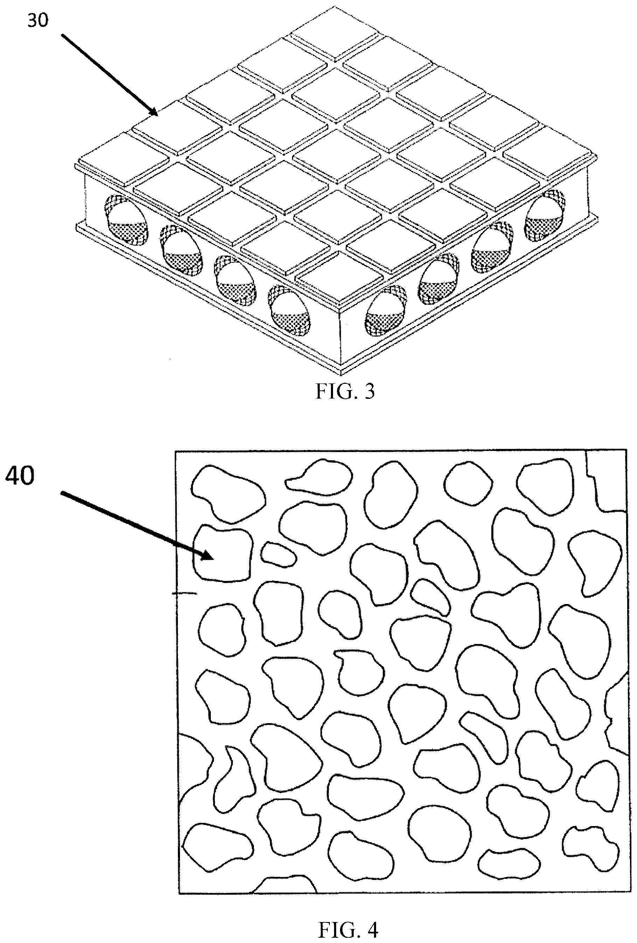

Figure 2 shows an embodiment utilizing a roller contact element **20** with the e-paper while the roller contact element is in contact with the e-paper, where the e-paper has a protective layer **26,** microcapsules **14,** conductive regions (or electrode regions) **22,** and a conductive layer (or electrode) **24.** Figure 3 shows charge retention islands **30** described in US 6,222,513 and Figure 4 shows alternative charge retention islands **40** described in US 6,222,513.

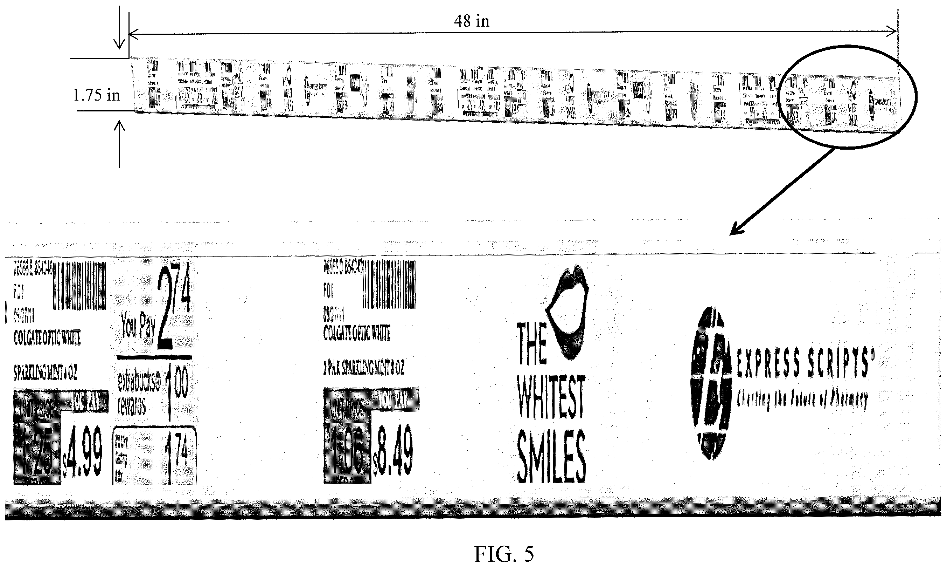

Figure 5 shows a 48" x 1.75" POPedge display in accordance with an embodiment of the subject invention, and an enlargement of a section thereof. The display shows the pricing as well as any promotion information, advertisements, or additional information about the products.

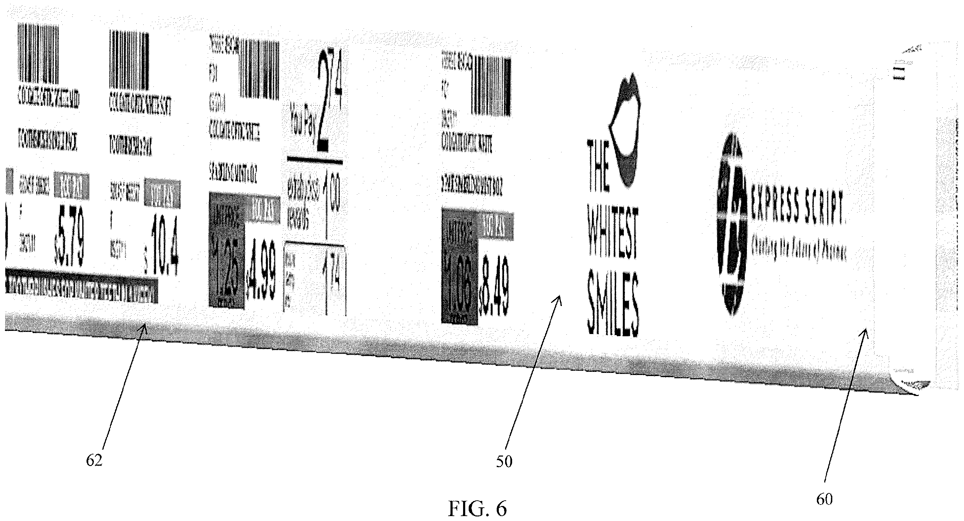

Figure 6 shows the arrangement of the shelf attachment/display holder **62,** the E-paper display **50,** and the driver **60.**

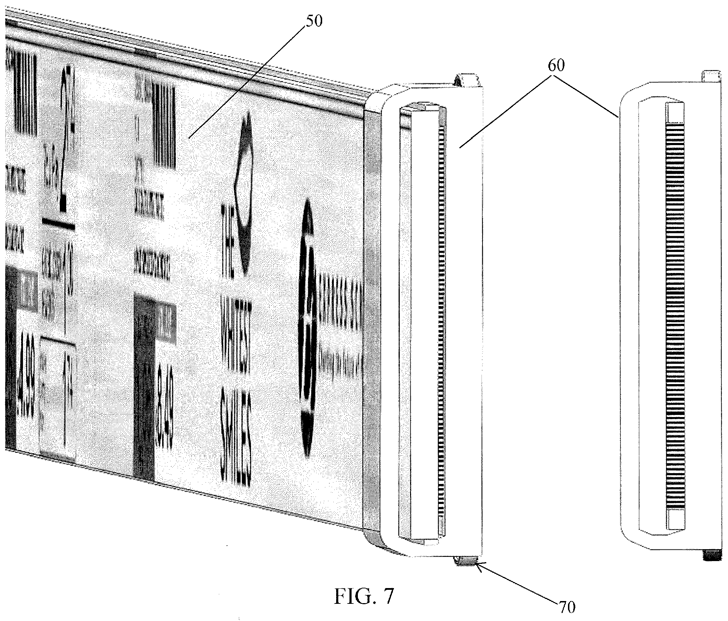

In this embodiment, the driver **60** surrounds the e-paper **50,** as shown in Figure 7. In alternative embodiments the driver does not need to surround the e-paper **50** (e.g., a transparent front surface could be used in the display and the driver could couple with the display to provide the force needed for good contact). The display **50** is sufficiently flexible to allow sufficient, and preferably absolute, contact between the conductive elements and the front plate, for sufficient periods of time to effect charge transfer, and preferably at all times. The driver wheels **70** attached to the driver **60** enable the driver to move across the e-paper **50** from side to side by pushing off of the display. In alternative embodiments the driver wheels could push off of the e-paper, or off of the back of the display such that the back of the display pushing on the wheels provides good friction with the wheels and a force to encourage contact between the e-paper and the driver. Alternative embodiments can have a mechanism in the display that moves along the display and the driver can attach to. One of the biggest problems previous apparatus have had is the friction between the conductive element and the E-paper causing the conductive element(s) to wear out. Embodiments of the subject device incorporating an encapsulating loop can maintain the pressure between the driver's conductive element(s) and the e-paper's conductive elements at an optimum level, such that proper electrical connection is made without friction causing the conductive elements to prematurely wear out.

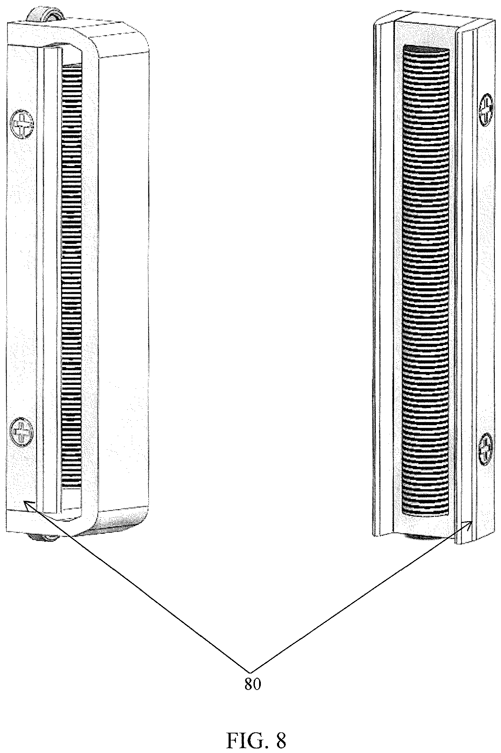

The wipers **80** attached to the driver can support the front panel of the driver **60** for encapsulation, as shown in Figure 8. The wipers can be made of metal or can be made of a non-conductive material having a portion made of metal that moves up and down and be used to erase the information on the pixels. The wipers **80** can be placed on both sides such that the driver **60** will update the e-paper **50** while moving from either side. Alternatively, a single wiper can be used. The wipers **80** can also sweep any dust on the e-paper to provide better contact between the driver **60** and the e-paper **50.** The supporting wipers **80** can support the e-paper **50** to be held between the plates and the second portion of the driver **60.** In this way, any wrinkled areas of the e-paper that can affect the intactness of the contact due to the flexibility of the e-paper can be smoothed out.

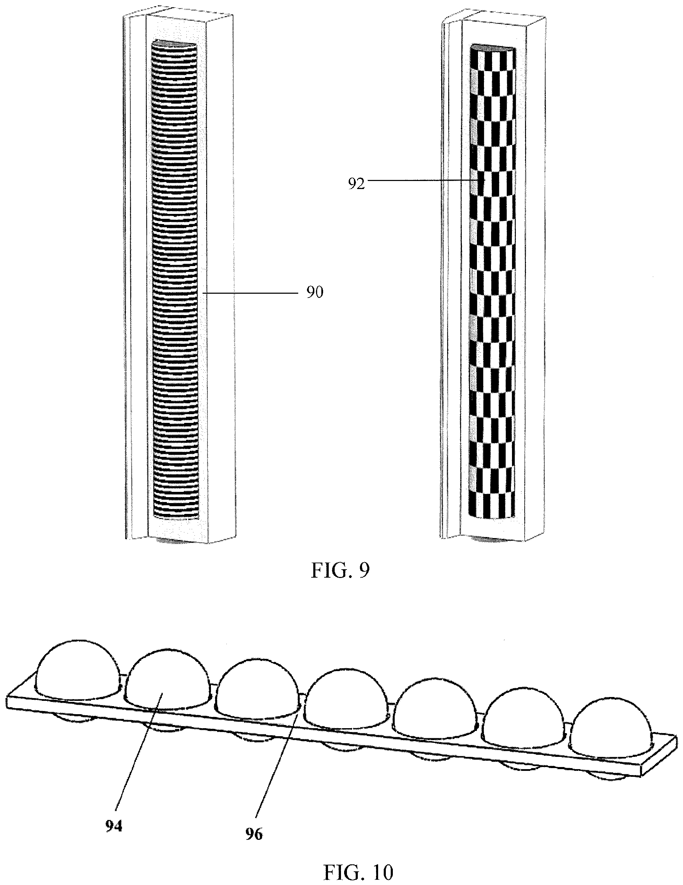

The conductive element that transfers charge to the e-paper (the conductive regions **22** on the e-paper) can have a variety of shapes. In one embodiment, the contact element can be a roller covered with conductive material and non-conductive material positioned in a sequence, as shown in Figure 9 and Figure 10. The roller can be made of a Zebra stripe **90** cut in a cylindrical shape, a film that has conductive and non-conductive areas **92** and rolled over a cylinder, or with conductive and non-conductive materials layered on top of each other and cut through with a cylindrical cutter or small beads 94 lined up together separated with non-conductive element 96 . Each conductive strip, or conductive area, can be controlled by a transistor or a driver IC attached to (or touching) the PCB inside the driver. Alternatives to the PCB can be used to provide the charge needed, for transfer by the contact element. Different patterns on the roller can be chosen, but the pattern **90** on the left in Figure 9 can be easier to implement. Instead of a roller, sweeping components known in the art can be used.

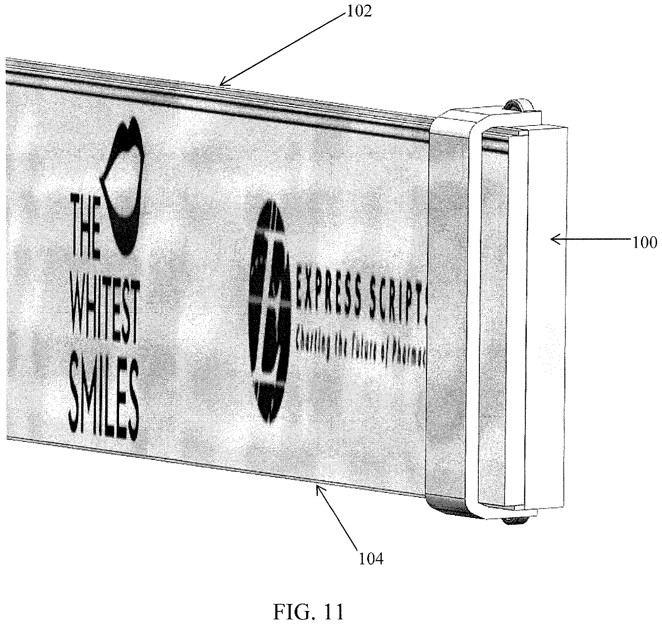

Two conductive plates **102** and **104** can be embedded into, or otherwise interconnected to, the front plate, as shown in Figure 11. These plates can deliver power to the driver. The driver can get power from a power source **100** located on the shelf, the display's sides, or other convenient location. Having the power supply positioned at a location other than the driver can decrease the weight of the driver, and increase the energy efficiency and speed of the driver. The driver may carry the power source on the driver, depending on the power consumption and the type of power required. As an example, if a power harvesting apparatus is used, the power unit required may be so small that the power unit can be located on the driver.

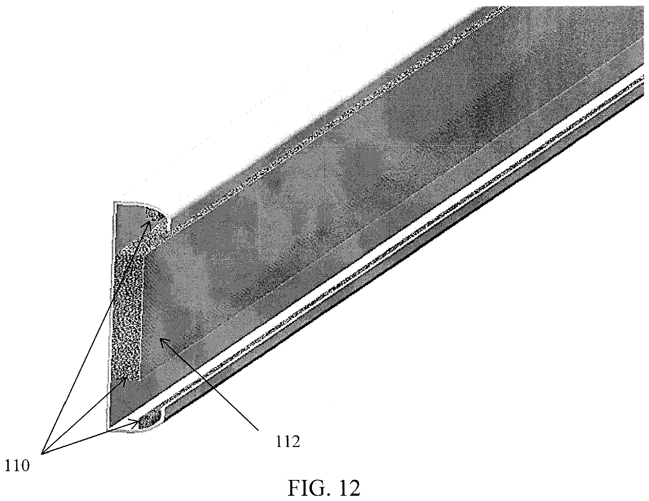

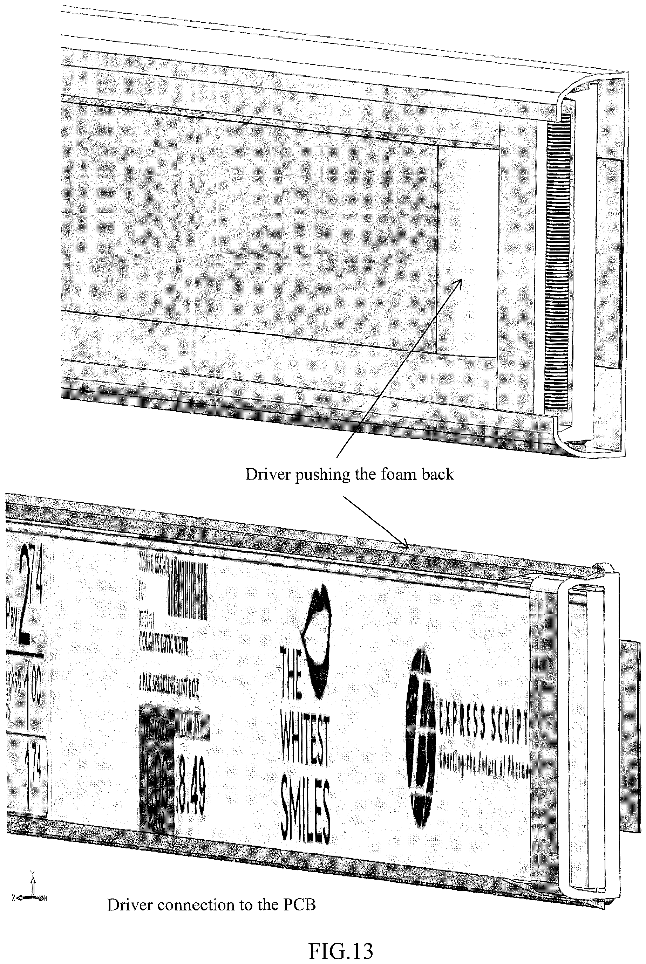

The holder **160** can be supported with a resilient material, which can apply a tension to push the driver toward the e-paper, such as foam **110.** The foam can having a coating on the portion in contact with the driver, such as a thin plastic layer **112,** as shown in Figure 12, to reduce the frictional force from the driver sliding along the foam. The foam **110** pushes the e-paper to the front and makes it look aligned and nicer on the shelf by preventing it from floating inside. Since the foam **110** is very flexible, when the driver **60** moves, it pushes the foam **110** back and creates a cavity for easier movement, as shown in Figure 13.

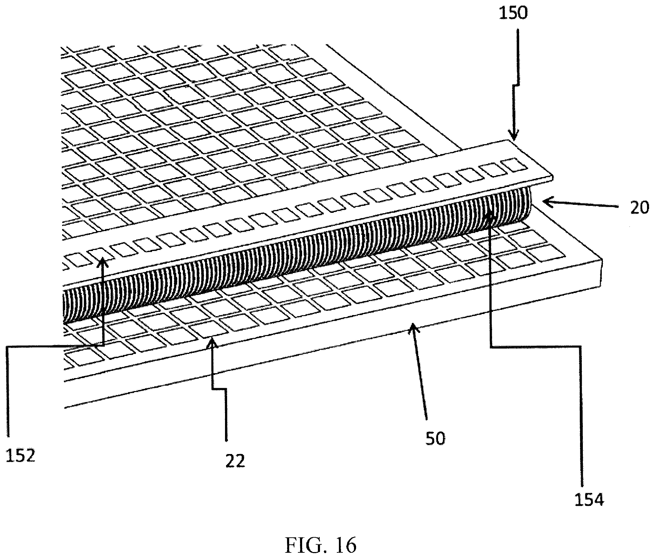

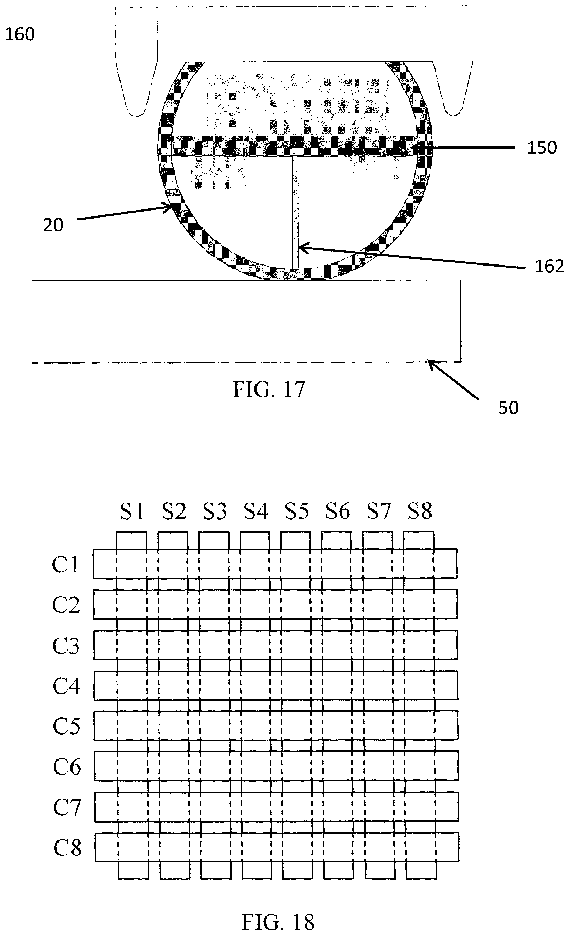

Figure 16 shows the driver **60** connection to the PCB board **150.** The conductive parts, e.g., pads, on the PCB are each charged by the controller unit (e.g., charged by a transistor or directly charged by the microchip). The cylindrical contact element, or roller **20,** is not wired to the PCB board **150.** Instead, the conductive elements on the roller **154** touch the conductive pads **152** on the PCB, and transfer the current (or electric charge) to the conductive regions of the e-paper by the conductive elements simultaneously contacting the e-paper side. Although Figure 17 shows the conductive regions of the e-paper in a pattern, the regions can be randomly located, or located in any desired pattern or design. In this way, the roller **20** is a passive element that can easily be replaced if needed, such as due to damage caused by the friction between the e-paper **50** and roller **20** and/or friction between the roller **20** and the PCB board **150.**

In another embodiment not covered by the invention the roller **20** can carry the driver ICs inside of the roller and the roller can be wired to the driving components, as in Figure 17.

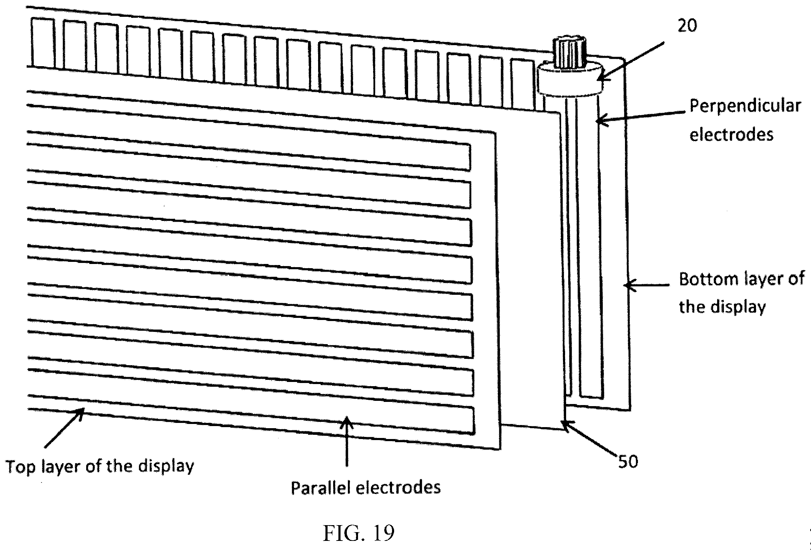

Figure 18 shows another type of e-paper technology that utilizes a passive matrix driving method described in US20130162511. As described in US20130162511, the ink layer of the e-paper is encapsulated with a top with column electrodes and a bottom layer with row electrodes, such that the intersecting areas of the row electrodes and the column electrodes forms the pixels of this display. An embodiment of the subject invention can utilize an electrode structure as taught in US20130162511, and shown in Figure 18. Figure 19 shows one embodiment using the electrode structure of Figure 18, where the roller element moves on the edge of one side and charges the electrodes as it moves. The surface of the roller where it touches the e-paper does not have to have any pattern on it as in figure 9 instead the whole surface or the portion of the surface can be made of conductive material or the roller itself (cyclindrical or sphere) can be made of conductive material . This driver can be moved along the edge of either side of the e-paper as long as the moving direction is perpendicular to the electrodes. As the driver moves and charges or grounds the electrodes, the electrodes on the other layer is charged with a voltage that is either the same voltage, which keeps the color of the intersecting area (in other terms the pixels of this display) the same, or a different voltage, which causes the color of the intersecting area to change.

Aspects of the invention, such as driving the roller element, may be described in the general context of computer-executable instructions, such as program modules, being executed by a computer. Generally, program modules include routines, programs, objects, components, data structures, etc., that perform particular tasks or implement particular abstract data types. Moreover, those skilled in the art will appreciate that the invention may be practiced with a variety of computer-system configurations, including multiprocessor systems, microprocessor-based or programmable-consumer electronics, minicomputers, mainframe computers, and the like. Any number of computer-systems and computer networks are acceptable for use with the present invention.

Specific hardware devices, programming languages, components, processes, protocols, and numerous details including operating environments and the like are set forth to provide a thorough understanding of the present invention. In other instances, structures, devices, and processes are shown in block-diagram form, rather than in detail, to avoid obscuring the present invention. But an ordinary-skilled artisan would understand that the present invention may be practiced without these specific details. Computer systems, servers, work stations, and other machines may be connected to one another across a communication medium including, for example, a network or networks.

As one skilled in the art will appreciate, embodiments of the present invention may be embodied as a system according to appended claim 1.

The invention may be practiced in distributed-computing environments where tasks are performed by remote-processing devices that are linked through a communications network. In a distributed-computing environment, program modules may be located in both local and remote computer-storage media including memory storage devices. The computer-useable instructions form an interface to allow a computer to react according to a source of input. The instructions cooperate with other code segments to initiate a variety of tasks in response to data received in conjunction with the source of the received data.

The present invention may be practiced in a network environment such as a communications network. Such networks are widely used to connect various types of network elements, such as routers, servers, gateways, and so forth. Further, the invention may be practiced in a multi-network environment having various, connected public and/or private networks.

Communication between network elements may be wireless or wireline (wired). As will be appreciated by those skilled in the art, communication networks may take several different forms and may use several different communication protocols. And the present invention is not limited by the forms and communication protocols described herein.

It should be understood that the examples and embodiments described herein are for illustrative purposes only and that various modifications or changes thereof within the scope of the appended claims will be suggested to persons skilled in the art by this application.

## Claims

1. An e-paper system, comprising:
an e-paper (50),
wherein the e-paper (50) has a plurality of electrode regions (12) configured to independently receive charge, retain charge, and have charge removed therefrom,
wherein transferring charge to and/or removing charge from one or more electrode regions (12) of the plurality of electrode regions controls an output state of the e-paper (50),
a driver (60), wherein the driver comprises:
a control unit;
a plurality of driver contacts (152),
a printed circuit board (150), wherein the plurality of driver contacts (152) are positioned on the printed circuit board (150);
wherein the control unit is configured to selectively and independently charge each driver contact of the plurality of driver contacts (152); and
a contact element (20), wherein the contact element has a plurality of conductive elements (154),
a mechanical driver,
wherein the mechanical driver is configured to slidably move the driver (60) with respect to the e-paper (50) in a first direction,
wherein as the driver (60) slidably moves with respect to the e-paper (50), the plurality of conductive elements (154) are changeably positioned with respect to the plurality of electrode regions (12) of the e-paper (50) to transfer charge from the plurality of driver contacts (152) to one or more of the electrode regions (12) of the plurality of electrode regions of the e-paper (50) based on a linear position along the e-paper (50) with respect to the first direction,
wherein the contact element (20) is not wired to the printed circuit board (150), wherein the conductive elements (154) on the contact element (20) touch the driver contacts (152) on the printed circuit board (150).

2. The system according to claim 1,
wherein the contact element (20) comprises a rotating element, wherein the rotating element comprises the plurality of conductive elements (154),
wherein when the driver (60) slidably moves with respect to the e-paper (50), the rotating element rotates,
wherein as the rotating element rotates the plurality of conductive elements (154) are changeably positioned with respect to the plurality of electrode regions (12) of the e-paper (50) to transfer charge to one or more of the electrode regions (12) of the plurality of electrode regions of the e-paper (50) based on a rotational position of the rotating element and the linear position along the e-paper (50) with respect to the first direction,
wherein at a first rotational position and a first linear position, a first subset of the conductive elements (154) of the plurality of conductive elements of the rotating element electrically connects a first subset of driver contacts (152) of the plurality of driver contacts (152) with a first subset of electrode regions (12) of the plurality of electrode regions,
wherein at a second rotational position and a second linear position, a second subset of the conductive elements (154) of the plurality of conductive elements of the rotating element electrically connects a second subset of driver contacts (152) of the plurality of driver contacts (152) with a second subset of electrode regions (12) of the plurality of electrode regions.

3. The system according to claim 2,
wherein the one or more of the conductive elements of the plurality of conductive elements of the rotating element are charged first and then as the rotating element rotates the one or more of the conductive elements of the plurality of conductive elements of the rotating element charges the one or more of the electrode regions (12) of the plurality of electrode regions on the e-paper (50).

4. The system according to claim 2,
wherein the plurality of conductive elements of the rotating element are coated with low friction conductive material.

5. The system according to claim 2,
wherein the rotating element comprises a cylinder with film that has consecutive conductive and non-conductive regions (92) surrounding the surface of the cylinder;
wherein the rotating element comprises a cylinder with consecutive conductive and non-conductive layers; or
wherein the rotating element comprises conductive beads (94) lined up together with non-conductive elements (96) in between.

6. The system according to claim 5,
wherein the surface of the cylindrical element has a pattern of conductive and non-conductive regions; or
wherein the surface of the cylindrical element has only conductive regions that are spaced apart.

7. The system according to claim 1, further comprising:
a wiper (80),
wherein the wiper (80) removes charge from the plurality of electrode regions (12) as the driver (60) slidably moves with respect to the e-paper (50).

8. The system according to claim 1,
wherein the driver (60) holds the e-paper (50) in-between a first portion of the driver (60) and a second portion of the driver (60),
wherein the first portion of the driver (60) is positioned on a first side of the e-paper (50),
wherein the plurality of electrode regions (12) are on the first side of the e-paper (50),
wherein the second portion of the driver (60) is positioned on a second side of the e-paper (50),
wherein the second portion of the driver (60) applies pressure to the second side of the e-paper (50) to ensure a contact between the first portion of the driver (60) and the first side of the e-paper (50).

9. The system according to claim 8,
wherein the driver (60) encircles the e-paper, and/or
wherein the first portion of the driver (60) has the plurality of conductive elements.

10. The system according to claim 7,
wherein the wiper (80) is conductive and moveably attached to the driver (60), wherein when the wiper (80) touches the e-paper (50) the wiper (80) erases an image on the e-paper (50).

11. The system according to claim 1,
wherein the system is adapted to be attached to an edge of a shelf,
wherein the driver (60) is stationary with respect to the edge of the shelf, wherein the e-paper (50) moves along the edge of the shelf over the e-paper (50).

12. The system according to claim 1,
wherein the e-paper (50) is flexible, and/or
wherein the e-paper (50) is configured to attach to an edge of a shelf, such that the e-paper (50) is stationary with respect to the edge of the shelf, wherein the driver (60) slidably moves along the edge of the shelf over the e-paper (50) so as to slidably move with respect to the e-paper (50).

13. A system for displaying information, comprising:
one or more e-paper systems according to claim 1,
wherein each of the one or more e-paper systems comprises an e-paper (50) and a driver (60), and
wherein the driver (60) writes on one or more e-papers (50) aligned together;
a communications module, wherein the communications module provides a first signal to the driver (50) as to what to write on the e-paper (50); and
a command module,
wherein the command module provides a second signal to the communications module, wherein the second signal provides one or more updates for the driver (60) to write on the e-paper (50).

14. The system according to claim 1,
wherein the printed circuit board (150) comprises an array of thin film transistors.

## Patentansprüche

1. Ein E-Paper-System, umfassend:
ein E-Paper (50),
wobei das E-Paper (50) eine Mehrzahl von Elektrodenbereichen (12) aufweist, die dazu konfiguriert sind, unabhängig voneinander Ladung aufzunehmen, Ladung zu halten und Ladung abzugeben,
wobei die Übertragung der Ladung zu und/oder die Abgabe der Ladung von einem oder mehreren Elektrodenbereichen (12) der Mehrzahl von Elektrodenbereichen einen Ausgabezustand des E-Papers (50) steuert,
einen Treiber (60), wobei der Treiber umfasst:
eine Steuereinheit;
eine Mehrzahl von Treiberkontakten (152),
eine Leiterplatte (150), wobei die Mehrzahl von Treiberkontakten (152) auf der Leiterplatte (150) angeordnet sind;
wobei die Steuereinheit dazu konfiguriert ist, jeden Treiberkontakt der Mehrzahl von Treiberkontakten (152) selektiv und unabhängig zu laden; und
ein Kontaktelement (20), wobei das Kontaktelement eine Mehrzahl von leitfähigen Elementen (154) aufweist, einen mechanischen Antrieb,
wobei der mechanische Antrieb dazu konfiguriert ist, den Treiber (60) dem E-Paper (50) gegenüber gleitbeweglich in eine erste Richtung zu verschieben,
wobei die Mehrzahl von leitfähigen Elementen (154) der Mehrzahl von Elektrodenbereichen (12) des E-Papers (50) gegenüber veränderlich positioniert wird, wenn der Treiber (60) sich dem E-Paper (50) gegenüber gleitbeweglich verschiebt, um auf der Basis einer linearen Position entlang des E-Papers (50) in der ersten Richtung Ladung der Mehrzahl von Treiberkontakten (152) zu einem oder mehreren der Elektrodenbereiche (12) der Mehrzahl von Elektrodenbereichen des E-Papers (50) zu übertragen,
wobei das Kontaktelement (20) nicht mit der Leiterplatte (150) verdrahtet ist, wobei die leitfähigen Elemente (154) auf dem Kontaktelement (20) mit den Treiberkontakten (152) auf der Leiterplatte (150) in Kontakt sind.

2. Das System nach Anspruch 1,
wobei das Kontaktelement (20) ein rotierendes Element umfasst, wobei das rotierende Element die Mehrzahl von leitfähigen Elementen (154) umfasst,
wobei das rotierende Element sich dreht, wenn der Treiber (60) sich dem E-Paper (50) gegenüber gleitbeweglich verschiebt,
wobei die Mehrzahl von leitfähigen Elementen (154) der Mehrzahl von Elektrodenbereichen (12) des E-Papers (50) gegenüber veränderlich positioniert werden, wenn das rotierende Element sich dreht, um auf der Basis einer Drehposition des rotierenden Elements und der linearen Position entlang des E-Papers (50) in der ersten Richtung Ladung zu einem oder mehreren der Elektrodenbereiche (12) der Mehrzahl von Elektrodenbereichen des E-Papers (50) zu übertragen,
wobei in einer ersten Drehposition und in einer ersten linearen Position eine erste Teilmenge der leitfähigen Elemente (154) der Mehrzahl von leitfähigen Elementen des rotierenden Elements eine erste Teilmenge von Treiberkontakten (152) der Mehrzahl von Treiberkontakten (152) elektrisch mit einer ersten Teilmenge der Elektrodenbereiche (12) der Mehrzahl von Elektrodenbereichen verbindet,
wobei in einer zweiten Drehposition und in einer zweiten linearen Position eine zweite Teilmenge der leitfähigen Elemente (154) der Mehrzahl von leitfähigen Elementen des rotierenden Elements eine zweite Teilmenge der Treiberkontakte (152) der Mehrzahl von Treiberkontakten (152) elektrisch mit einer zweiten Teilmenge der Elektrodenbereiche (12) der Mehrzahl von Elektrodenbereichen verbindet.

3. Das System nach Anspruch 2,
wobei erst die ein oder mehreren leitfähigen Elemente der Mehrzahl von leitfähigen Elementen des rotierenden Elements geladen werden und dann, wenn das rotierende Element sich dreht, die ein oder mehreren leitfähigen Elemente der Mehrzahl von leitfähigen Elementen des rotierenden Elements die ein oder mehreren Elektrodenbereiche (12) der Mehrzahl von Elektrodenbereichen auf dem E-Paper (50) lädt.

4. Das System nach Anspruch 2,
wobei die Mehrzahl von leitfähigen Elementen des rotierenden Elements mit einem reibungsarmen leitfähigen Material beschichtet sind.

5. Das System nach Anspruch 2,
wobei das rotierende Element einen Zylinder mit Film umfasst, der aufeinanderfolgende leitfähige und nicht leitfähige Bereiche (92) aufweist, die die Oberfläche des Zylinders umgeben;
wobei das rotierende Element einen Zylinder mit aufeinanderfolgenden leitfähigen und nicht leitfähigen Schichten umfasst; oder
wobei das rotierende Element leitfähige Kügelchen (94) umfasst, die zusammen mit nicht leitfähigen Elementen (96) dazwischen angeordnet sind.

6. Das System nach Anspruch 5,
wobei die Oberfläche des zylindrischen Elements ein Muster aus leitfähigen und nicht leitfähigen Bereichen aufweist; oder
wobei die Oberfläche des zylindrischen Elements nur leitfähige Bereiche aufweist, die voneinander beabstandet sind.

7. Das System nach Anspruch 1, außerdem umfassend:
einen Abstreifer (80),
wobei der Abstreifer (80) Ladung aus der Mehrzahl von Elektrodenbereichen (12) entfernt, wenn der Treiber (60) sich dem E-Paper (50) gegenüber gleitend bewegt.

8. Das System nach Anspruch 1,
wobei der Treiber (60) das E-Paper (50) zwischen einem ersten Abschnitt des Treibers (60) und einem zweiten Abschnitt des Treibers (60) hält,
wobei der erste Abschnitt des Treibers (60) auf einer ersten Seite des E-Papers (50) angeordnet ist,
wobei die Mehrzahl von Elektrodenbereichen (12) auf der ersten Seite des E-Papers (50) liegen,
wobei der zweite Abschnitt des Treibers (60) auf einer zweiten Seite des E-Papers (50) angeordnet ist,
wobei der zweite Abschnitt des Treibers (60) auf die zweite Seite des E-Papers (50) einen Druck ausübt, um einen Kontakt zwischen dem ersten Abschnitt des Treibers (60) und der ersten Seite des E-Papers (50) zu gewährleisten.

9. Das System nach Anspruch 8,
wobei der Treiber (60) das E-Paper umschließt, und/oder wobei der erste Abschnitt des Treibers (60) die Mehrzahl von leitfähigen Elementen aufweist.

10. Das System nach Anspruch 7,
wobei der Abstreifer (80) leitfähig ist und beweglich am Treiber (60) angebracht ist, wobei der Abstreifer (80) ein Bild auf dem E-Paper (50) löscht, wenn der Abstreifer (80) mit dem E-Paper (50) in Kontakt ist.

11. Das System nach Anspruch 1,
wobei das System geeignet ist, an einen Rand eines Regals befestigt zu werden,
wobei der Treiber (60) dem Regalrand gegenüber stationär ist, wobei das E-Paper (50) sich entlang des Regalrands über dem E-Paper (50) bewegt.

12. Das System nach Anspruch 1,
wobei das E-Paper (50) flexibel ist, und/oder
wobei das E-Paper (50) dazu konfiguriert ist, so an einem Regalrand befestigt zu sein, dass das E-Paper (50) dem Regalrand gegenüber stationär ist, wobei der Treiber (60) sich entlang des Regalrands gleitend über das E-Paper (50) bewegt, um sich dem E-Paper (50) gegenüber gleitbeweglich zu verschieben.

13. Ein System zur Informationsanzeige, umfassend:
ein oder mehrere E-Paper-Systeme nach Anspruch 1,
wobei jedes der E-Paper-Systeme ein E-Paper (50) und einen Treiber (60) umfasst, und
wobei der Treiber (60) ein oder mehrere miteinander ausgerichtete E-Papers (50) beschreibt;
ein Kommunikationsmodul, wobei das Kommunikationsmodul dem Treiber (50) ein erstes Signal darüber bereitstellt, was auf das E-Paper (50) zu schreiben ist; und
ein Befehlsmodul,
wobei das Befehlsmodul dem Kommunikationsmodul ein zweites Signal bereitstellt, wobei das zweite Signal dem Treiber (60) ein oder mehrere Aktualisierungen bereitstellt, die auf das E-Paper (50) zu schreiben sind.

14. Das System nach Anspruch 1,
wobei die Leiterplatte (150) eine Anordnung von Dünnschichttransistoren umfasst.

## Revendications

1. Un système de papier électronique, comprenant :
un papier électronique (50),
dans lequel le papier électronique (50) comporte une pluralité de régions d'électrodes (12) configurées pour indépendamment recevoir une charge, retenir une charge, et avoir une charge retirée,
dans lequel le transfert de charge à et/ou le retrait de charge depuis une ou plusieurs régions d'électrodes (12) de la pluralité de régions d'électrodes commandent un état de sortie du papier électronique (50),
un pilote (60), dans lequel le pilote comprend :
une unité de commande ;
une pluralité de contacts de pilote (152),
une carte de circuit imprimé (150), dans lequel la pluralité de contacts de pilote (152) est positionnée sur la carte de circuit imprimé (150);
dans lequel l'unité de commande est configurée pour charger sélectivement et indépendamment chaque contact de pilote de la pluralité de contacts de pilote (152) ; et
un élément de contact (20), dans lequel l'élément de contact comporte une pluralité d'éléments conducteurs (154),
un pilote mécanique,
dans lequel le pilote mécanique est configuré pour déplacer en coulissement le pilote (60) par rapport au papier électronique (50) dans une première direction,
dans lequel à mesure que le pilote (60) se déplace en coulissement par rapport au papier électronique (50), la pluralité d'éléments conducteurs (154) est positionnée de façon modifiable par rapport à la pluralité de régions d'électrodes (12) du papier électronique (50) pour transférer une charge depuis la pluralité de contacts de pilote (152) vers une ou plusieurs des régions d'électrodes (12) de la pluralité de régions d'électrodes du papier électronique (50) en se basant sur une position linéaire le long du papier électronique (50) par rapport à la première direction,
dans lequel l'élément de contact (20) n'est pas câblé à la carte de circuit imprimé (150), dans lequel les éléments conducteurs (154) sur l'élément de contact (20) touchent les contacts de pilote (152) sur la carte de circuit imprimé (150).

2. Le système selon la revendication 1,
dans lequel l'élément de contact (20) comprend un élément tournant, dans lequel l'élément tournant comprend la pluralité d'éléments conducteurs (154),
dans lequel lorsque le pilote (60) se déplace en coulissement par rapport au papier électronique (50), l'élément tournant tourne,
dans lequel à mesure que l'élément tournant tourne, la pluralité d'éléments conducteurs (154) est positionnée de façon modifiable par rapport à la pluralité de régions d'électrodes (12) du papier électronique (50) pour transférer une charge à une ou plusieurs des régions d'électrodes (12) de la pluralité de régions d'électrodes du papier électronique (50) en se basant sur une position de rotation de l'élément tournant et la position linéaire le long du papier électronique (50) par rapport à la première direction,
dans lequel à une première position de rotation et une première position linéaire, un premier sous-ensemble des éléments conducteurs (154) de la pluralité d'éléments conducteurs de l'élément tournant connecte électriquement un premier sous-ensemble de contacts de pilote (152) de la pluralité de contacts de pilote (152) à un premier sous-ensemble de régions d'électrodes (12) de la pluralité de régions d'électrodes (12),
dans lequel à une seconde position de rotation et une seconde position linéaire, un second sous-ensemble des éléments conducteurs (154) de la pluralité d'éléments conducteurs de l'élément tournant connecte électriquement un second sous-ensemble de contacts de pilote (152) de la pluralité de contacts de pilote (152) à un second sous-ensemble de régions d'électrodes (12) de la pluralité de régions d'électrodes.

3. Le système selon la revendication 2,
dans lequel les un ou plusieurs éléments conducteurs de la pluralité d'éléments conducteurs de l'élément tournant sont chargés en premier puis à mesure que l'élément tournant tourne, les un ou plusieurs éléments conducteurs de la pluralité d'éléments conducteurs de l'élément tournant chargent les une ou plusieurs régions d'électrodes (12) de la pluralité de régions d'électrodes sur le papier électronique (50).

4. Le système selon la revendication 2,
dans lequel la pluralité d'éléments conducteurs de l'élément tournant est revêtue d'un matériau conducteur à coefficient de frottement réduit.

5. Le système selon la revendication 2,
dans lequel l'élément tournant comprend un cylindre avec un film qui comporte des régions conductrices et non conductrices consécutives (92) entourant la surface du cylindre ;
dans lequel l'élément tournant comprend un cylindre avec des couches conductrices et non conductrices consécutives ; ou
dans lequel l'élément tournant comprend des billes conductrices (94) alignées avec des éléments non conducteurs (96) entre elles.

6. Le système selon la revendication 5,
dans lequel la surface de l'élément cylindrique comporte un motif de régions conductrices et non conductrices ; ou
dans lequel la surface de l'élément cylindrique ne comporte que des régions conductrices qui sont espacées.

7. Le système selon la revendication 1, comprenant en outre :
un organe essuyeur (80),
dans lequel l'organe essuyeur (80) retire une charge de la pluralité de régions d'électrodes (12) à mesure que le pilote (60) se déplace en coulissement par rapport au papier électronique (50).

8. Le système selon la revendication 1,
dans lequel le pilote (60) tient le papier électronique (50) entre une première portion du pilote (60) et une seconde portion du pilote (60),
dans lequel la première portion du pilote (60) est positionnée sur un premier côté du papier électronique (50),
dans lequel la pluralité de régions d'électrodes (12) est sur le premier côté du papier électronique (50),
dans lequel la seconde portion du pilote (60) est positionnée sur un second côté du papier électronique (50),
dans lequel la seconde portion du pilote (60) applique une pression au second côté du papier électronique (50) pour assurer un contact entre la première portion du pilote (60) et le premier côté du papier électronique (50).

9. Le système selon la revendication 8,
dans lequel le pilote (60) encercle le papier électronique, et/ou dans lequel la première portion du pilote (60) comporte la pluralité d'éléments conducteurs.

10. Le système selon la revendication 7,
dans lequel l'organe essuyeur (80) est conducteur et fixé de façon mobile au pilote (60), dans lequel lorsque l'organe essuyeur (80) touche le papier électronique (50), l'organe essuyeur (80) efface une image sur le papier électronique (50).

11. Le système selon la revendication 1,
dans lequel le système est adapté pour être fixé à un bord d'une étagère,
dans lequel le pilote (60) est stationnaire par rapport au bord de l'étagère, dans lequel le papier électronique (50) se déplace le long du bord de l'étagère par-dessus le papier électronique (50).

12. Le système selon la revendication 1,
dans lequel le papier électronique (50) est flexible, et/ou dans lequel le papier électronique (50) est configuré pour se fixer à un bord d'une étagère, de telle sorte que le papier électronique (50) est stationnaire par rapport au bord de l'étagère, dans lequel le pilote (60) se déplace en coulissement le long du bord de l'étagère par-dessus le papier électronique (50) de manière à se déplacer en coulissement par rapport au papier électronique (50).

13. Un système d'affichage d'informations, comprenant :
un ou plusieurs systèmes de papier électronique selon la revendication 1,
dans lequel chacun des un ou plusieurs systèmes de papier électronique comprend un papier électronique (50) et un pilote (60), et
dans lequel le pilote (60) écrit sur un ou plusieurs papiers électroniques (50) alignés ensemble ;
un module de communications, dans lequel le module de communications fournit un premier signal au pilote (50) quant à ce qu'il faut écrire sur le papier électronique (50) ; et
un module d'ordre,
dans lequel le module d'ordre fournit un second signal au module de communications,
dans lequel le second signal fournit une ou plusieurs mises à jour pour que le pilote (60) écrive sur le papier électronique (50).

14. Le système selon la revendication 1,
dans lequel la carte de circuit imprimé (150) comprend une barrette de transistors en couche mince.
